# EUROPEAN PATENT APPLICATION

(11) **EP 2 450 866 A1**
(43) Date of publication of application: **09.05.2012**
(21) Application number: 10290596.5
(22) Date of filing: 03.11.2010
(51) Int. Cl.: G08G 1/0968, G08G 1/0967, G01C 21/34, G08G 1/07

(54) **Individual interactive energy-optimized routing of traffic participants**

(71) Applicant: Alcatel Lucent, 75007 Paris (FR)
(72) Inventor: Bitzer, Thomas, 73614 Schorndorf (DE); Haupt, Mirko, 70825 Korntal-Münchingen (DE); Pascht, Andreas, Dr., 73635 Rudersberg (DE)
(74) Representative: Michalski Hüttermann & Partner

(57) **Abstract**

The invention relates to an apparatus and a method for energy optimized routing of traffic participants in road traffic (user). The method comprising the step of receiving a first set of data (1sd) from at least a traffic participant (user), comprising at least a current position (cur_pos) and a destination (dest) of said traffic participant (user). Further said method comprises the step of receiving a second set of data (2sd) from at least a traffic control equipment (tce) comprising at least a current status (cur_stat) of said traffic control equipment (tce). At least one of said first set of data (1sd) and said second set of data (2sd) is transmitted by wireless telecommunication. Said method further comprises the step of processing said received first set of data (1sd) from said traffic participant (user) and said received second set of data (2sd) from said traffic control equipment (tce). Said processing comprises at least calculating for said traffic participant (user) a third set of data (3sd) comprising at least an optimum path (opt_path) and an optimum speed (opt_speed), based on said first set of data (1sd) and based on said second set of data (2sd). Said method further comprises transmitting said third set of data (3sd) to said traffic participant (user), for controlling said path and said speed of said traffic participant (user) to equalize the speed of said traffic participant (user).

## Description

In road traffic there is a continuous demand of energy saving. Worldwide, transportation of persons and goods leads to a significant fraction of the total energy consumption. Estimations range up to about 33 % of the total required energy. Most of the energy needed for transportation is consumed by individual traffic (cars, trucks). However, today's individual traffic is not optimized regarding lowest possible energy and time consumption. For example, in cities the traffic is interrupted by a high amount of traffic lights and junctions. This leads to many acceleration processes that in turn need a lot of energy.

On the car/truck level, the energy consumption of individual traffic is reduced mainly by means of better engines with higher energy efficiency. However, there are physical limitations of the saving potential, due to, e.g. the weight of the car/truck, the road resistance of the wheels, or the aerodynamic resistance, and the like.

On the "network level", there are means of routing like navigation systems etc. However, they provide information about a "fixed" path (e.g. the shortest one), but do not take into account the paths of other traffic participants. In many cases, it may be preferable to choose even a longer path if on this path the car is less stopped by traffic lights, junctions, or the like. Furthermore, these tools do not provide information about the optimum speed at which the car ride can be done, so that the car doesn't have to decelerate, accelerate or stop completely so often.

Further approaches for traffic routing are using sensors along the road in order to gather areas with heavy traffic. The other traffic participants are then warned collectively about traffic jams. However, these systems do not take into account the destination of the traffic participants. In the worst case, it could be that another traffic jam is caused at another location because the cars are following the same warnings.

### Summary

In view of this background, it is an object of the present invention to provide a system and a method for energy-optimized routing of traffic participants (user). This object is achieved by an apparatus and a method according to the independent claims. Preferred embodiments are given in the dependent claims.

In particular, the object is addressed by a method for energy optimized routing of traffic participants in road traffic, comprising the step of receiving a first set of data from at least a traffic participant, said first set of data comprising at least a current position and a destination of said traffic participant. Further said method comprises the step of receiving a second set of data from at least a traffic control equipment, said second set of data comprising at least a current status of said traffic control equipment. At least one of said first set of data and said second set of data is transmitted by wireless telecommunication. Said method further comprises the step of processing said received first set of data and said received second set of data. Said processing comprises at least calculating for said traffic participant a third set of data comprising at least an optimum path and an optimum speed, based on said first set of data and based on said second set of data. Said method further comprises transmitting said third set of data to said traffic participant, for controlling said path and said speed of said traffic participant to equalize a speed of said traffic participant.

Traffic participants in road traffic typically are cars and trucks, but can also be other participants like motor bikes, bicycles and others. The invention relates to road traffic in general, more particular to road traffic in cities and between-cities connections like highways, freeways, and the like.

The first set of data is data transmitted from a traffic participant to a control server. It comprises at least information about a current position of the traffic participant and its desired destination. Typically, information about position and destination of a traffic participant is comprising geographical information as used in global positioning systems, but may be any kind of geographical positioning information, as well as other useful information for comprehension about the current position of the traffic participant, like for example road-labeling, street name and number, and the like.

The second state of data is data transmitted from a traffic control equipment to the control server. A traffic control equipment may be a simple traffic light, as well as a set of traffic lights. A traffic control equipment may also be a traffic road sign like a maximum speed sign, a stop sign and the like, as well as a direction sign and other traffic road sign that help controlling road traffic. Desirably, in this invention the traffic control equipment can also be a traffic management system or a traffic management control center. Moreover a traffic control equipment may be any kind of electrical equipment or electrical installation used for controlling road traffic.

The second set of data comprises at least information about a current status of the traffic control equipment. Typically information about a current status of the traffic control equipment comprises the actual information visualized on the traffic control equipment, like the actual state of a traffic light (e.g. red, green or yellow state), the actual maximum speed shown on a traffic sign (e.g. 50 km/h or 65 mph, etc.), the actual direction indicated on a traffic sign (for example left arrow, right arrow, straight ahead arrow, road blocked, etc.), and the like.

Moreover, the status of a traffic sign may comprise information about start and duration of the actual state of the traffic control equipment. Thus, for example for a traffic light the information about its current status may comprise the actual state "green" and "50 seconds" as the remaining duration of the green phase. The second set of data may even comprise more complex information about a current status of the traffic control equipment, for example in case of a traffic management system it may comprise current status information about at least a part of the traffic signs and traffic lights controlled by this system.

The transmission of the data is performed either on wire or wireless.

On wire data transmission in general uses wired telecommunication networks, like the ones used by telecommunication providers, but also cable networks like the ones used by cable-TV providers as well as the ones used for internet are useable.

At least one of the first set of data and the second set of data is transmitted by wireless telecommunication, whereby wireless telecommunication may be any known kind of GSM-telecommunication, as well as mobile data communication like GPRS, EDGE, CDMA, UMTS, 3G and 4G communications and the like. The wireless transmission of data may even be provided by using protocols of WLAN, Bluetooth and the like.

Processing of data comprises calculation of control data for traffic participants as well as for traffic control equipment. Moreover, data processing may even comprise visualization of data for monitoring at least a part of the controlled traffic and the optimized traffic control equipment. Processing of data may also comprise compression and decompression of data for optimized transmission of data.

Like mentioned above at least one step of data processing comprises calculation of control data for traffic participants. Such calculation comprises at least calculating an optimal path and an optimal speed for the traffic participant. In order to find the optimal path and speed for the traffic participant, an optimization process may be started, wherein many possible paths and their relating traffic control equipment are calculated and compared to each other and the optimal path and speed are extracted.

The optimization process may take into account a minimization of time and energy consumption for the traffic participant for reaching the traffic participant's destination.

As there are designated communication intervals possible in which an on board unit of the traffic participant communicates with the control server and the traffic control equipment communicates with the control server, the above mentioned optimization process for a traffic participant may be performed each time new information from the traffic participant or traffic control equipment are available.

Thus, the optimization process can lead to equalization of speed of the traffic participant, such that acceleration and deceleration processes are avoided or at least minimized.

Energy efficiency of car and truck traffic can be drastically increased on a network level. The traffic participants save fuel costs and also time due to equalized speed and due to avoiding traffic jams. The environment is less polluted with greenhouse gases, other exhaust gases and noise (caused by acceleration processes).

Compared to improving the energy efficiency on the car/truck level (by improving the engine etc.), this invention allows significant additional energy-savings on the road network level. Compared to existing routing possibilities, this solution can also take into account the behavior and destination of other traffic participants in order to allow an optimization of the path of each individual traffic participant. Additionally, the solution also gives the information about the optimum speed to the traffic participants, which is not possible in the existing routing tools.

In an embodiment of the present invention the method comprises that said first received set of data is transmitted by at least an on board unit of said at least one traffic participant.

The on board unit may comprise an individual navigation system for the traffic participant, as well as a wireless transmitter and receiver. Moreover, such an on board unit may comprise a global positioning system receiver for determining the geographical position of the traffic participant. It is also possible to use a minimized on board unit, which only comprises a transmitter and receiver and a small CPU for processing of data needed to be transmitted to a control server and for processing the received data. Therefore, such an on board unit may communicate with a navigation system to transmit information about the received optimal path to the desired destination and to visualize the optimum received speed to the traffic participant.

It is also possible that the on board unit is a "whole in one" unit, as mentioned above, or just has some of the needed modules realized. Also, many more features added to such an on board unit are realizable, such as providing a radio receiver for receiving radio-broadcast, a whole entertainment system and the like.

With such a small realization, costs for providing an on board unit may be low, as already integrated systems of the traffic participant may be connected to the on board unit. On the other hand, for new vehicle, a "whole in one" on board unit may lead to a reduction of cost compared to many stand-alone equipment provided to the traffic participant, plus such a "whole in one" integrated product may lead to significant increase of system speed and system stability of the on board unit.

In another embodiment of the present invention the method comprises receiving of said first set of data from said traffic participant is performed by at least a base station.

Preferably, a base station to be used within the inventive method is a base station used in mobile telecommunication system as already worldwide in use for GSM-net. Such base station may be used without adding to infrastructure cost, as they are already available near to dense traffic roads, outside and also inside cities. Moreover, specialized base stations for transmitting of data regarding geogaphical position / location and related data, as well as speed, path and traffic control equipment status data may be preferred.

Especially where GSM base stations are not positioned in close vicinity to road traffic, such specialized base stations may be of advantage.

In a preferred embodiment of the present invention, the method comprises that said received first set of data is transmitted from said base station to at least a control server.

A control server is preferably a computer system, used for calculation of traffic data as mentioned above. Such a control server may be clustered and such clusters of control servers may be connected together via a network, like e.g. the internet.

With use of clustered and decentralized control servers a significant higher availability of the system may be provided as well as lower response times that may lead to even more accurate calculation of optimal path and speed for the traffic participant and of status data for the traffic control equipment.

In a further preferred embodiment of the present invention the method comprises that calculating of said third set of data for said traffic participant is performed by said control server.

In a further embodiment of the present invention the method comprises that said calculated third set of data is transmitted from said control server to said on board unit.

As such control server comprises means for transmitting and receiving data for traffic control and geographical coordinates, routing speed of traffic participants, such control server may directly transmit and receive data to and from on board units and traffic control equipment.

In a further preferred embodiment of the present invention the method comprises that said calculated third set of data is transmitted to said on board unit via said base station.

For transmitting and receiving data to and from a base station, the control server may need to communicate with another base station that interacts as a relay station. So, data may be transmitted over more than one transmission way, for example wireless from the on board unit to the base station and wired from the base station to the control server and the other way around. In this way, already existing infrastructure may be optimal used, thus saving costs for building up needed infrastructure for providing the service.

In a further preferred embodiment of the present invention the method comprises calculating for said traffic control equipment a fourth set of data comprising at least a future status of said traffic control equipment based on said calculated third set of data. This embodiment further comprises transmitting said fourth set of data to said traffic control equipment, for controlling said status of said traffic control equipment. This embodiment moreover comprises setting the status of said traffic control equipment in accordance to said received fourth set of data.

The fourth set of data comprises similar information like the second set of data. The difference between both sets is that the second set of data is a current status information transmitted from the traffic control equipment to the control server, while the fourth set of data is a calculated status data for the traffic control equipment and transmitted to this traffic control equipment for changing its status according to the received fourth set of data.

The expression "future" in the future status means a future time. This future time may be the time at which the traffic participant is expected to pass the traffic control equipment. This time may comprise a time frame, which may project the fuzziness with which the passing time may be calculated. Therefore, this time frame may then be used as start and/or duration of the future status of the traffic control equipment.

The more traffic participants are connected to the system, the better optimized results are expected for such energy and time optimized routing of traffic participants in the connected environment of traffic control equipment.

Transmitting not only the optimal path and the optimal speed to a traffic participant, but also controlling the future status of a traffic control equipment leads to even better optimized strategies for an energy and time optimized routing of traffic participants.

In a further preferred embodiment of the present invention the method comprises transmitting said sets of data to and from said on board unit by use of wireless telecommunication.

As the traffic participants are moving across the roads, the easiest way of transmitting data to and from the on board unit of the traffic participant is to use wireless telecommunication for transmission of this data.

This helps reducing costs for providing the energy optimized routing of traffic participants in road traffic service, as already available infrastructure can be used.

Nevertheless, other way of data transmission are possible, like for example the use of transmission cable inserted into the road, adapted for signal transmission of signals received from traffic participants. This may for example be performed by radio frequency identification (RFID) located in the vehicle of the traffic participant.

Moreover, the object of the present invention is addressed by a system for use in energy optimized routing of traffic participants in road traffic, comprising at least an on board unit of at least a traffic participant, at least a traffic control equipment, and at least a control server. Said on board unit comprises means to transmit at least a first set of data comprising at least a current position and a destination of said traffic participant. Said on board unit further comprises means to receive at least a third set of data comprising at least an optimum path and an optimum speed for said traffic participant. Said traffic control equipment comprises means to transmit at least a second set of data comprising at least a current status of said traffic control equipment. Said control server comprises means to receive said first set of data and said second set of data. Moreover said control server comprises means to calculate for said traffic participant said third set of data based on said first set of data and based on said second set of data. Said control server further comprises means to transmit said third set of data.

In a further embodiment of the invention, the system comprises a base station for providing communication of the traffic participant and/or the traffic control equipment with the control server. Said base station can comprise means to receive said first set of data, said second set of data and said third set of data. Said base station can further comprise means to transmit said received data. Said system can further comprise that at least one of said transmitted data is transmitted by wireless telecommunication.

In a further preferred embodiment of the present invention the system comprises a global positioning system (GPS) receiver connected to said on board unit of said traffic participant, which GPS receiver provides data about the current position of said traffic participant (user).

Such connection of a GPS receiver to the on board unit may be an internal or external connection. An internal connection of a GPS receiver with the on board unit leads to a "whole in one" boxed on board unit that contains the GPS receiver. An external connection of a GPS receiver to the on board unit may use already accessible GPS receiver from the traffic participant, thus leading to reduced costs for the on board unit, compared to a complete boxed on board unit. Such an external connection may be provided by any kind of connection used for data transmission from one electronic device to another electronic device. Preferably, a serial connection is used for connecting an external GPS receiver to the on board unit, most preferably this connection is provided by use of universal serial bus (USB).

In a further preferred embodiment of the present invention said control server comprises at least two control servers, connected together in a network.

In a further preferred embodiment of the present invention said control server further comprises means to calculate a fourth set of data comprising at least a future status of said traffic control equipment based on said calculated third set of data. Said control server further comprises means to transmit said fourth set of data. Said base station further comprises means to receive and transmit said fourth set of data. Said traffic control equipment further comprises means to receive and process said fourth set of data, in order to change its status according to said received fourth set of data.

In a further preferred embodiment of the present invention the system comprises means to transmit said first set of data and said third set of data by wireless telecommunication.

In a further embodiment of the present invention the system comprises means to transmit said second set of data and said fourth set of data by wireless telecommunication.

Moreover, the object of the present invention is addressed by an apparatus for energy optimized routing of traffic participants in road traffic, the apparatus at least comprising:
- a means to determine a current position of a traffic participant;
- an user interface adapted for inputting an intended destination of a traffic participant;
- a means for transmitting information about the current position and the intended destination to a control server;
- a means for receiving information about the optimum path and an optimum speed; and
- an user interface adapted for outputting the information about an optimum path and an optimum speed.

In an embodiment of this apparatus, the means for transmitting (transmitter) and the means for receiving (receiver) are wireless telecommunication means. Telecommunication may be any known kind of GSM-telecommunication, as well as mobile data communication like GPRS, EDGE, CDMA, UMTS, 3G and 4G communications and the like. The wireless telecommunication means may even use protocols of WLAN, Bluetooth and the like.

In an embodiment of this apparatus, the user interface adapted for inputting information about an intended destination of a traffic participant is a keyboard, touch-screen, jog-wheel, or voice interface.

In a further embodiment of this apparatus, the user interface adapted for outputting the information about an optimum path and an optimum speed is a display or a voice output. In a further preferred embodiment, the user interface is a head-up display.

In a further preferred embodiment, the apparatus is integrated into an on-board-unit. Preferably, the on-board-unit is adapted to make use of systems already existing in a vehicle used by a traffic participant, like e.g. an existing navigation system and/or a wireless telecommunication system. so that data about a current position and a destination can be griped from the existing navigation system and can be transmitted via the existing wireless telecommunication system.

In a further preferred embodiment, the apparatus combines the functionalities of a navigation system, a wireless telecommunication system, and an apparatus for energy optimized routing of traffic participants in road traffic in one integrated unit.

### Brief description of the Figures

Some embodiments of an apparatus and/or methods in accordance with embodiments of the present invention are now described, by way of example only, and with reference to the accompanying drawings, in which:
- Fig. 1: schematically illustrates a simplified diagram showing the function of the system components for a preferred embodiment of the invention;
- Fig. 2: schematically illustrates a simplified bubble chart showing the data signal flow between the system components of a preferred embodiment of the invention;
- Fig. 3: schematically illustrates a simplified layout of an apparatus according to a preferred embodiment of the invention.

### Detaíled description of the invention

The invention will now be described with reference to preferred embodiments which are not intended to limit the scope of the present invention but for exemplifying the invention. Not all of the features and combinations thereof described in the embodiment are necessarily essential to the invention.

In this specification, a "condition where a member A is connected to a member B" refers to the condition where the member A and the member B are physically connected to each other directly and to the condition where the member A and the member B are connected indirectly via other members that do not affect the electrical connection. Similarly, a "condition where a member C is provided between the member A and the member B" refers to, in addition to the condition where the member A and the member C or the member B and the member C are connected to one another directly, the condition where the members are connected indirectly via other members that do not affect the electrical connection.

The embodiments explained in the following relate to routing of traffic participants in road traffic, and more specifically, to individual energy-optimized routing of traffic participants in road traffic.

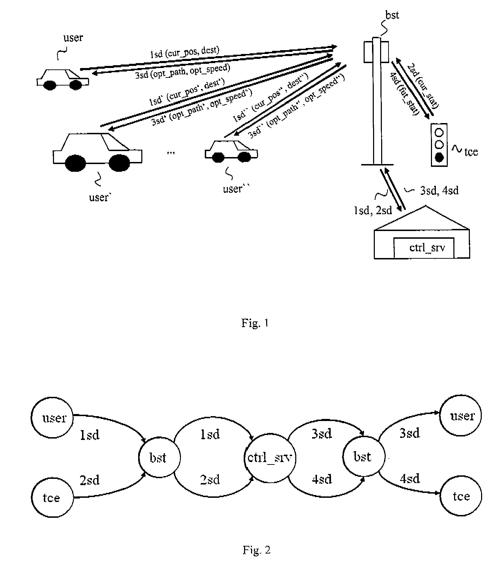

Fig. 1 schematically illustrates a simplified diagram showing the function of the system components for a preferred embodiment of the invention. The basic idea is an individual energy-optimized routing of traffic participants (user) based on wireless telecommunication. This is based on the following steps:

Data of the current position cur_pos of the user as well as their destination dest are gathered (the position cur_pos can be determined for example using a GPS receiver on board of each car/truck). The data Isd might be transmitted in a wireless network to a base station bst. Furthermore, data 2sd from traffic control equipment tce is gathered. In case of traffic lights, this may at least be the information cur_stat when a certain traffic light is either red or green. This information 2sd can also be transmitted in a wireless network to a base station bst or by means of wired connections if available.

A central control server ctrl_srv processes the data 2sd from traffic control equipment tce (e.g. the green/red phases of traffic lights) as well as the position cur_pos and destination dest from many user and calculates for these user at least the optimum path opt_path and speed opt_speed, so that the overall energy and time consumption is minimized. Therefore, an optimization is done so, that in the best case the user can drive at an equal speed opt_speed and do not cross at the same time (no breaking and thus no acceleration required).

Finally, the traffic control is done by means of
- providing information 3sd to each individual user about at least best path opt_path and speed opt_speed.
- providing control information 4sd for controlling the traffic lights tcc and other means of traffic control equipment tce, so that the speed opt_speed of the user is individually equalized.

The data 1sd, 2sd, 3sd, 4sd might be transmitted in a wireless network from a base station bst to the user and also to the traffic lights tce, etc (the fixed installations like traffic lights tce might also be controlled by means of wired connections if available).

Moreover Fig. 1 shows an example with three traffic participants (user, user', user"). In practice, the number of user may be arbitrary and there may also be other user like trucks, etc.

Each of the cars (user, user', user") is transmitting the information 1sd, 1sd', 1sd" of its current position cur_pos, cur_pos', cur_pos" as well as its destination dest, dest', dest" to a base station bst of a wireless communication network. The base station bst furthermore gets information 2sd from a traffic light tce about the red/green phases (this information cur_stat could also be collected by means of wired connection if available).

The information 1sd, 2sd gathered at this base station bst as well as gathered at other base stations bst* (that are connected to other traffic participants (user*)) - bst* and user* are not drawn in Fig. 1 for the sake of simplicity - is processed in the central control server ctrl_srv. The control server ctrl_srv optimizes at least the path opt_path, opt_path', opt_path", opt_path* and speed opt_speed, opt_speed', opt_speed", opt_speed* for each traffic participant (user, user', user", user* ) and may also generate the data 4sd to control traffic control equipment tce like traffic lights etc. The information 3sd, 4sd is then distributed via the wireless communication network bst, bst* to each individual traffic participant (user, user', user", user*) and possibly also to the traffic control equipment tce (in this example a traffic light tce).

Fig. 2 schematically illustrates a simplified bubble chart showing the data signal flow between the system components of a preferred embodiment of the invention. The user transmits its set of data 1sd to a base station, while the traffic control equipment tce also transmits its set of data 2sd to the base station. Both actions do not have to be performed at the same time. The base station acts as a kind of relay station, which sends received sets of data 1sd, 2sd further to a control server. The control server calculates two data sets. A data set 3sd is containing an optimal path opt_path and an optimal speed opt_speed for a user and another data set 4sd is containing a future status for a traffic control equipment tce. Both calculated sets of data 3sd, 4sd are transmitted to a corresponding base station bst and from there are transmitted further either to another base station or to its destination, e.g. a user and/or a traffic control equipment tce.

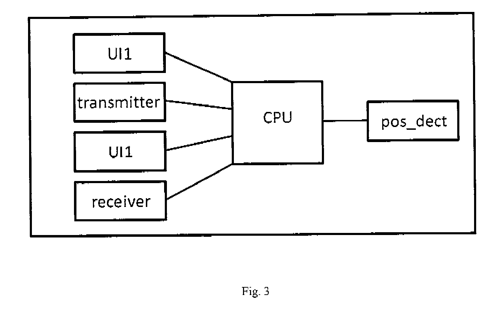

Fig. 3 schematically illustrates a simplified layout of an apparatus according to a preferred embodiment of the invention. The apparatus comprises a means pos_dect to determine a current position of a traffic participant. The pos_dect may be a GPS-receiver or an interface connected to a GPS-receiver already existing in a traffic participant's vehicle, like e.g. a navigation system. Furthermore, the apparatus comprises a first user interface ui1 for inputting an intended destination of a traffic participant. The ui1 may be a keyboard, touch-screen, jog-wheel, or voice interface. The apparatus also comprises a means (transmitter) for transmitting information about the current position and the intended destination to a control server, as well as a means for receiving (receiver) information from said control server about the optimum path and an optimum speed. Transmitter and receiver may be integrated into one combined transmitting/receiving unit, like e.g. a mobile phone unit. Furthermore, the apparatus comprises a second user interface ui2 for outputting the information about an optimum path and an optimum speed received from a control server in a way recognizable to the traffic participant, like e.g. a display or a voice output. The ui2 may be an interface adapted to interact with output means already existing in a traffic participant's vehicle, like e.g. a head-up display, media entertainment system, or the like. In the apparatus, pos_dect, ui1, transmitter, receiver, and ui2 a connected to a central processing unit CPU, which CPU controls the interaction of the individual units, so that information about the current position and the destination are provided to the transmitter for transmitting these information to a control server, and information received by the receiver from said control server about an optimal path and speed are provided to the ui2 for making them recognizable to the traffic participant.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g. digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figs, including any functional blocks la-beled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for energy optimized routing of traffic participants (user) in road traffic, compri sing the steps of:
- receiving a first set of data (1sd) from at least a traffic participant (user), comprising at least a current position (cur_pos) and a destination (dest) of said traffic participant (user),
- receiving a second set of data (2sd) from at least a traffic control equipment (tce) comprising at least a current status (cur_stat) of said traffic control equipment (tce),
wherein at least one of said first set of data (1sd) and said second set of data (2sd) is transmitted by wireless telecommunication,
said method further comprising the steps of:
- processing said received first set of data (1sd) from said traffic participant (user) and said received second set of data (2sd) from said traffic control equipment (tce), wherein said processing comprises at least
- calculating for said traffic participant (user) a third set of data (3sd) comprising at least an optimum path (opt_path) and an optimum speed (opt_speed), based on said first sct of data (1sd) and based on said second set of data (2sd),
- transmitting said third set of data (3sd) to said traffic participant (user), for controlling said path and said speed of said traffic participant (user) to equalize the speed of said traffic participant (user).

2. The method according to claim 1, wherein
said first received set of data (1sd) is transmitted by at least an on board unit (obu) of said at least one traffic participant (user).

3. The method according to claim 1, wherein the steps of
receiving said first set of data (1sd) from said traffic participant (user) is performed by at least a base station (bst).

4. The method according to any of the preceding claims, wherein the step of
calculating said third set of data (3sd) for said traffic participant (user) is performed by said control server (ctrl_srv).

5. The method according to claim 4, wherein
said calculated third set of data (3sd) is transmitted from said control server (ctrl_srv) to said on board unit (obu).

6. The method according to any of the preceding claims, further comprising the steps of
- calculating for said traffic control equipment (tce) a fourth set of data (4sd) comprising at least a future status (fut_stat) of said traffic control equipment (tce) based on said calculated third set of data (3sd),
- transmitting said fourth set of data (4sd) to said traffic control equipment (tce), for controlling said status of said traffic control equipment (tce), and
- setting the status of said traffic control equipment (tce) according to said received fourth set of data (4sd).

7. The method according to any of the preceding claims, wherein
said transmitted set of data (1sd, 3sd) to and from said on board unit (obu) are transmitted by wireless telecommunication.

8. A system for energy optimized routing of traffic participants (user) in road traffic, comprising
at least an on board unit (obu) of at least a traffic participant (user), at least a traffic control equipment (tce), at least a control server (ctrl_srv),
- said on board unit (obu) comprising means to transmit at least a first set of data (1sd) comprising at least a current position (cur_pos) and a destination (dest) of said traffic participant (user),
- said on board unit (obu) further comprising means to receive at least a third set of data (3sd) comprising at least an optimum path (opt_path) and an optimum speed (opt_speed) for said traffic participant (user),
- said traffic control equipment (tce) comprising means to transmit at least a second set of data (2sd) comprising at least a current status (cur_stat) of said traffic control equipment (tce),
- said control server (ctrl_srv) comprising means to receive said first set of data (1sd) and said second set of data (2sd),
- said control server (ctrl_srv) comprising means to calculate for said traffic participant (user) said third set of data (3sd) based on said first set of data (1sd) and based on said second set of data (2sd),
- said control server (ctrl_srv) further comprising means to transmit said third set of data (3sd),
wherein at least one of said transmitted data (1sd, 2sd, 3sd) is transmitted by wireless telecommunication.

9. The system according to claim 8, comprising
a base station (bst) comprising means to receive said first set of data (1sd), said second set of data (2sd) and said third set of data (3sd), and
said base station (bst) further comprising means to transmit said received first and second set of data (1sd, 2sd) to said control server and said received third set of data (3sd) to said traffic participant (user).

10. The system according to one of the claims 8 or 9, comprising
- said control server (ctrl_srv) further comprising means to calculate a fourth set of data (4sd) comprising at least a future status (fut_stat) of said traffic control equipment (tce) based on said calculated third set of data (3sd),
- said control server (ctrl_srv) Further comprising means to transmit said fourth set of data (4sd),
- said base station (bst) further comprising means to receive and transmit said fourth set of data (4sd),
- said traffic control equipment (tce) further comprising means to receive and process said fourth set of data (4sd), in order to change its status according to said received fourth set of data (4sd).

11. The system according to one of the claims 8 to 10, wherein
said first set of data (1sd) and said third set of data (3sd) is transmitted by wireless telecommunication.

12. An apparatus for energy optimized routing of traffic participants (user) in road traffic, the apparatus at least comprising:
- a means (pos_dect) to determine a current position (cur_pos) of a traffic participant (user);
- an user interface (ui1) adapted for inputting an intended destination (dest) of a user;
- a means (transmitter) for transmitting information about the current position (cur_pos) and the intended destination to a control server (ctrl_srv);
- a means (receiver) for receiving information about the optimum path (opt_path) and an optimum speed (opt_speed); and
- an user interface (ui2) adapted for outputting the information about an optimum path (opt_path) and an optimum speed (opt_speed).

13. The apparatus according to claim 13, wherein said means to transmit (transmitter) and receive (receiver) are wireless telecommunication means.

14. The apparatus according to claim 13 or 14, wherein the apparatus is integrated into an on board unit (obu) of a traffic participant (user).

15. Use of a base station optimized for routing of traffic participants (user) in road traffic for receiving data about a current position (cur_pos) and a destination (dest) of said traffic participant (user) from an on board unit (obu) of a traffic participant (user), wherein the base station is adapted to receive data from said on board unit (obu) according to at least one protocol of the group consisting of GSM, GPRS, EDGE, CDMA, UMTS, 3G and 4G.
